# EUROPEAN PATENT APPLICATION

(11) **EP 4 625 844 A1**
(43) Date of publication of application: **01.10.2025**
(21) Application number: 23893751.0
(22) Date of filing: 17.11.2023
(51) Int. Cl.: H04B 10/25, H04B 10/2575

(54) **MANAGEMENT AND CONTROL METHOD AND APPARATUS FOR OPTICAL NETWORK SYSTEM**

(30) Priority: 21.11.2022 CN 202211458430
(71) Applicant: ZTE CORPORATION, Shenzhen, Guangdong 518057 (CN)
(72) Inventor: HE, Feng, Shenzhen, Guangdong 518057 (CN)
(74) Representative: Carangelo, Pierluigi
(86) International application number: PCT/CN2023/132409
(87) International publication number: WO 2024/109661

(57) **Abstract**

Provided are a management and control method and apparatus for optical network system. The method includes: mapping a user interface of an slave ONU to a first interface object of a master ONU; mapping a user interface of a master ONU to a second interface object of the master ONU, wherein the first interface object and the second interface object adopt a unified naming and coding rule; the master ONU reports the first interface object and the second interface object to the remote management system, so that the remote management system performs unified management and control on the master ONU and the slave ONU.

## Description

### Cross-Reference to Related Application

This invention is based on Chinese patent invention CN 202211458430.9, filed on 21 November 2022 and entitled "Management and control method and apparatus for optical network system", and claims the priority to the invention, which is incorporated in its entirety herein by reference.

### Technical Field

Examples of the present invention relate to the field of communications, and in particular, to a management and control method and apparatus for optical network system.

### Background

Gigabit-Capable Passive Optical Networks (GPON) technology is a passive optical access technology based on the ITU-T G.9xx standard. The GPON system includes an Optical Line Terminal (OLT) and an Optical Network Unit (ONU). ITU-T G.988 is an ONU management and control interface (OMCI), which is an international universal standard and is a mandatory protocol for OLT management. The OMCI protocol is an underlying management protocol embedded in a GPON/XGPON system, and is used for basic configuration related to a PON interface of an ONU, and is indispensable in the GPON/XGPON system.

The communication industry is continuously accelerating the upgrade of optical fiber bandwidth. Currently, most home networks have implemented optical fiber access. The global average level of the optical fiber-to-home permeability has reached 65%, which is more as high as 91.3% in China. The continuous improvement of optical fiber access and other network infrastructures provides a robust information base for the flourishing of Internet services. At the same time, innovative service applications emerge endlessly, such as ultra-high definition video, cloud virtual experience, cloud games, online education, and remote office, and impose higher requirements on network bandwidth, delay, and jitter. Fiber to The Room (FTTR), laying the fiber to each room, and realizing interconnection with the home gateway by deploying a slave ONU, so as to guarantee the high quality development of new service applications, such as online education, home office and home entertainment, to the greatest extent. Currently, the FTTR master and slave ONUs in the home all-optical network lack effective overall management and control solutions and standards.

### Summary

The present invention provides a management and control method and apparatus for optical network system, so as to at least solve the problem in the related art that it is difficult to perform overall management and control on a secondary architecture of a master optical network unit and a slave optical network unit of an optical network system.

According to an example of the present invention, provided is a management and control method for optical network system, including: mapping a user interface of a slave Optical Network Unit (ONU) to a first interface object of a master ONU; mapping a user interface of the master ONU to a second interface object of the master ONU, wherein the first interface object and the second interface object adopt a unified naming and coding rule; the master ONU reports the first interface object and the second interface object to a remote management system, so that the remote management system performs unified management and control on the master ONU and the slave ONU.

According to another example of the present invention, provided is a management and control apparatus for optical network system, including: a first mapping module, configured to map a user interface of a slave Optical Network Unit (ONU) to a first interface object of a master ONU; a second mapping module, configured to map a user interface of the master ONU to a second interface object of the master ONU, wherein the first interface object and the second interface object adopt a unified naming and coding rule; an interface reporting module, configured to report the first interface object and the second interface object to a remote management system, so that the remote management system performs unified management and control on the master ONU and the slave ONU.

According to another example of the present invention, a computer readable storage medium is also provided. The computer readable storage medium stores a computer program, wherein the computer program is configured to execute the steps in any one of the method embodiments when running.

According to another example of the present invention, also provided is an electronic device, including a memory and a processor, wherein the memory stores a computer program, and the processor is configured to run the computer program so as to execute the steps in any one of the method embodiments.

### Brief Description of the Drawings

Figure 1 is a hardware structure block diagram of a mobile terminal in a management control method for optical network system according to an embodiment of the present invention;
Figure 2 is a flowchart of a management control method for optical network system according to an embodiment of the present invention;
Figure 3 is a flowchart of a slave ONU user interface mapping according to an embodiment of the present invention;
Figure 4 is a flowchart of a slave ONU user interface mapping user interface according to an embodiment of the present invention;
Figure 5 is a structural block diagram of a management and control apparatus for optical network system according to an embodiment of the present invention;
Figure 6 is a structure diagram of a first mapping module according to an embodiment of the present invention;
Figure 7 is a structural block diagram of a first mapping module according to an embodiment of the present invention;
Figure 8 is a structural block diagram of an interface reporting module according to an embodiment of the present invention;
Figure 9 is a structural block diagram of an interface reporting module according to an embodiment of the present invention;
Figure 10 is a principle schematic diagram of a management control method for optical network system according to an embodiment of a scenario of the present invention;
Figure 11 is a flowchart of a management control method for optical network system according to an embodiment of a scenario of the present invention;
Figure 12 is a network architecture diagram of operation of a management control method according to a scenario embodiment of the present invention;
Figure 13 is a flowchart of a management control method for optical network system according to an embodiment of a scenario of the present invention;
Figure 14 is a flowchart of a management control method for optical network system according to an embodiment of a scenario of the present invention.

### Detailed Description of the Embodiments

Hereinafter, examples of the present invention will be described in detail with reference to the accompanying drawings and embodiments.

It should be noted that terms such as "first" and "second" in the description and claims of the examples of the present invention and the drawings are used to distinguish similar objects, and are not necessarily used to describe a specific sequence or order.

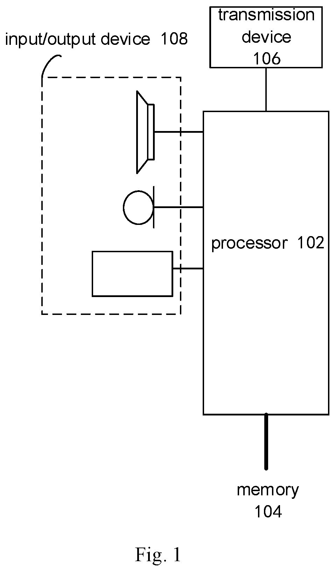

The method examples provided in the examples of the present invention may be implemented in a mobile terminal, a computer terminal, or a similar computing apparatus. By taking running on a computer terminal as an example, figure 1 is a hardware structure block diagram of a mobile terminal in a management and control method for optical network system according to an embodiment of the present invention. As shown in figure 1, the computer terminal may include one or more (only one is shown in figure 1) processors 102 (the processors 102 may include, but are not limited to, a microprocessor MCU or a processing apparatus such as a programmable logic device FPGA) and a memory 104 for storing data, wherein the computer terminal can further include a transmission device 106 and an input/output device 108 for a communication function. A person of ordinary skill in the art may understand that the structure shown in figure 1 is merely exemplary, which does not limit the structure of the foregoing computer terminal. For example, the computer terminal may further include more or less components than shown in figure 1, or have a different configuration from that shown in figure 1.

The memory 104 may be configured to store a computer program, for example, a software program and a module of invention software, such as a computer program corresponding to the method for managing and controlling an optical network system in the embodiment of the present invention. The processor 102 runs the computer program stored in the memory 104, so as to execute various function inventions and data processing, that is, implement the foregoing method. Memory 104 may include high-speed random access memory, and may also include non-volatile memory, such as one or more magnetic storage devices, flash memory, or other non-volatile solid-state memory. In some instances, memory 104 may further include memory remotely located with respect to processor 102, which may be connected to mobile terminals over a network. Examples of such networks include, but are not limited to, the Internet, intranets, local area networks, mobile communication networks, and combinations thereof.

The transmission device 106 is used to receive or transmit data via a network. The above-described network examples may include a wireless network provided by a communication provider of the computer terminal. In one example, the transfer device 106 may comprise a Network Interface Controller (NIC) that may interface with other network devices via a base station to communicate with the Internet. In one example, the transmission device 106 may be a Radio Frequency (RF) module for communicating wirelessly with the Internet.

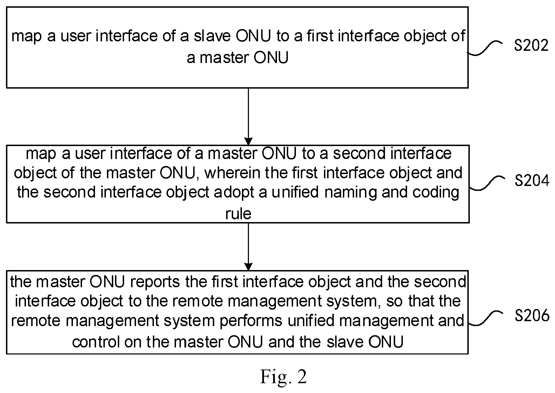

The embodiment provides a management and control method for optical network system operating on the computer terminal or network architecture. Figure 2 is a flowchart of the management and control method for optical network system according to an embodiment of the present invention. As shown in figure 2, the flow includes the following steps:
At S202, mapping a user interface of a slave ONU to a first interface object of a master ONU;
At S204, mapping the user interface of the master ONU to a second interface object of the master ONU, wherein the first interface object and the second interface object adopt a unified naming and coding rule;
At S206: the master ONU reports the first interface object and the second interface object to the remote management system, so that the remote management system performs unified management and control on the master ONU and the slave ONU.

By means of the described steps, a user interface of a slave ONU is mapped to a first interface object of a master ONU; mapping a user interface of a master ONU to a second interface object of the master ONU, wherein the first interface object and the second interface object adopt a unified naming and coding rule; the master ONU reports the first interface object and the second interface object to the remote management system, so that the remote management system performs unified management and control on the master ONU and the slave ONU. The problem that it is difficult to perform overall management and control on the secondary architectures of the master and slave optical network units of an optical network system is solved, and the effects of simply and efficiently performing overall management and control on the secondary architectures of the master and slave optical network units and improving the user experience are achieved.

The entity for performing the foregoing steps may be, but is not limited to, a base station or a terminal.

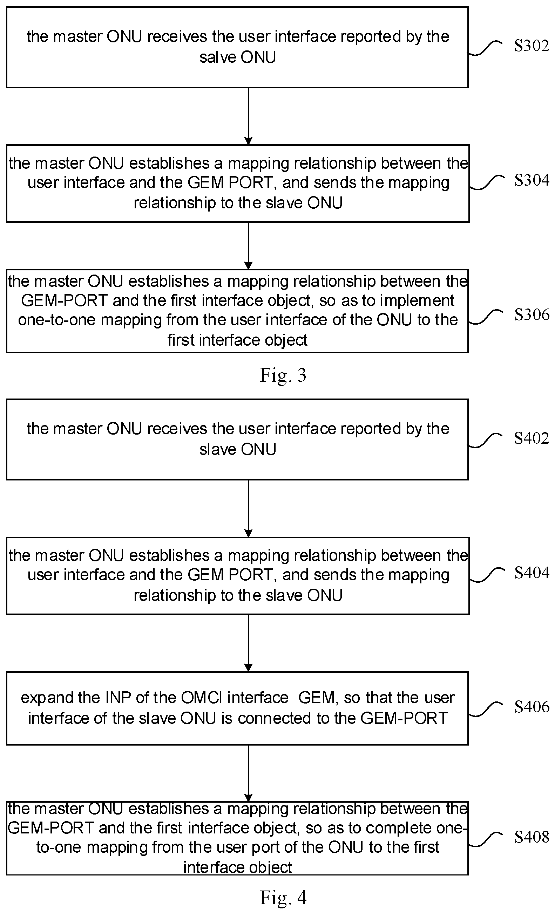

In an embodiment, figure 3 is a flowchart of a mapping from the user interface of the slave ONU to the user interface of the master ONU according to an embodiment of the present invention. As shown in figure 3, the mapping from the user interface of the slave ONU to the first interface object of the master ONU includes the following steps:
At S302, the master ONU receives a user interface reported by the slave ONU;
At S304, the master ONU establishes a mapping relationship between the user interface and a Gigabit passive optical network Encapsulation Method Port (GEM-PORT), and sends the mapping relationship to the slave ONU;
At S306: the master ONU establishes a mapping relationship between the GEM-PORT and the first interface object, so as to implement one-to-one mapping from the user port of the ONU to the first interface object.

In an embodiment, the step of the master ONU receiving the user interface reported by the salve ONU includes: the master ONU receiving the user interface reported by the salve ONU via an Optical network unit Management and Control Interface (OMCI).

In an embodiment, the step of a master ONU establishing a mapping relationship between a user interface and a GEM-PORT, and issuing the mapping relationship to a slave ONU includes: the master ONU establishing a mapping relationship between a user interface and the GEM-PORT, and sending the mapping relationship to the slave ONU via an OMCI interface.

In an embodiment, after the master ONU establishes a mapping relationship between a user interface and a GEM-PORT, and sends the mapping relationship to the slave ONU, the method further includes: by extending an interactive endpoint of an OMCI Gigabit passive optical network Encapsulation Method (GEM), enabling the user interface of the slave ONU is connected to the GEM-PORT. Figure 4 is a flowchart of the mapping from the user interface of the slave ONU according to an embodiment of the present invention. As shown in figure 4, the mapping from the user interface of the slave ONU to the first interface object of the master ONU includes the following steps:
At S402, the master ONU receives a user interface reported by the slave ONU;
At S404, the master ONU establishes a mapping relationship between the user interface and the GEM PORT, and sends the mapping relationship to the slave ONU;
At S406: by extending an Interworking Termination Point (INP) of a GEM of an OMCI interface, the user interface of the slave ONU is connected to the GEM-PORT;
At S408: the master ONU establishes a mapping relationship between the GEM-PORT and the first interface object to implement one-to-one mapping from the user port of the ONU to the first interface object.

In an embodiment, the master ONU reports the first interface object and the second interface object to the remote management system, including: the master ONU reports the first interface object and the second interface object to an Element Management System (EMS) or an Optical Line Terminal (OLT) management system through an OMCI interface.

In an embodiment, the master ONU reports the first interface object and the second interface object to the remote management system, including: the master ONU reports the first interface object and the second interface object to an Auto-Configuration Server (ACS) through a TR-181 interface.

In an embodiment, the first interface object and/or the second interface object includes at least an Ethernet interface, a traffic interface, and a wireless interface.

Through the description of the foregoing examples, a person skilled in the art may clearly understand that the method according to the foregoing examples may be implemented by software in addition to a necessary universal hardware platform, and definitely may also be implemented by hardware. However, in many cases, the former is a preferred implementation. Based on such understanding, the technical solutions of the embodiments of the present invention essentially or the part contributing to the prior art may be embodied in the form of a software product, the computer software product is stored in a storage medium (such as a ROM/RAM, a magnetic disk, and an optical disk), and includes several instructions for instructing a terminal device (which may be a mobile phone, a computer, a server, a network device, or the like).

A management and control apparatus for optical network system is also provided in the present embodiment. The apparatus is used for implementing the described embodiments and preferred implementations, and what has been described will not be elaborated. The term "module", as used hereinafter, is a combination of software and/or hardware capable of realizing a predetermined function. Although the apparatus described in the following embodiment is preferably implemented by software, implementation of hardware or a combination of software and hardware is also possible and conceived.

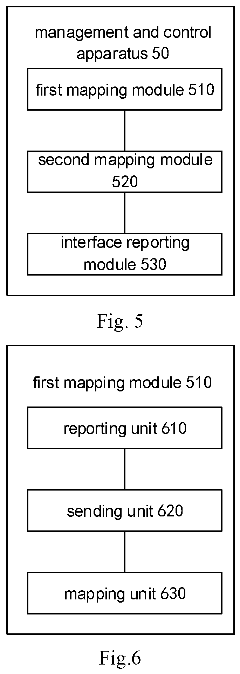

Figure 5 is a structural block diagram of a management control apparatus for optical network system according to an embodiment of the present invention. As shown in figure 5, the management control apparatus 50 includes: a first mapping module 510, configured to map a user interface of a slave ONU to a first interface object of a master ONU; a second mapping module 520, configured to map the user interface of the master ONU to a second interface object of the master ONU, where the first interface object and the second interface object adopt a unified naming and coding rule; the interface reporting module 530 is configured to report the first interface object and the second interface object to the remote management system, so that the remote management system performs unified management and control on the master ONU and the slave ONU.

In an embodiment, figure 6 is a structural block diagram of a first mapping module according to an embodiment of the present invention. As shown in figure 6, the first mapping module 510 includes: a reporting unit 610, configured to report a user interface of a slave ONU; a sending unit 620, configured to establish a mapping relationship between a user interface and a Gigabit passive optical network Encapsulation Method Port (GEM-PORT) at a master ONU, and sending the mapping relationship to a slave ONU; the mapping unit 630 is configured to establish, at the master ONU, a mapping relationship between the GEM-PORT and the first interface object, so as to implement one-to-one mapping from the user port of the ONU to the first interface object

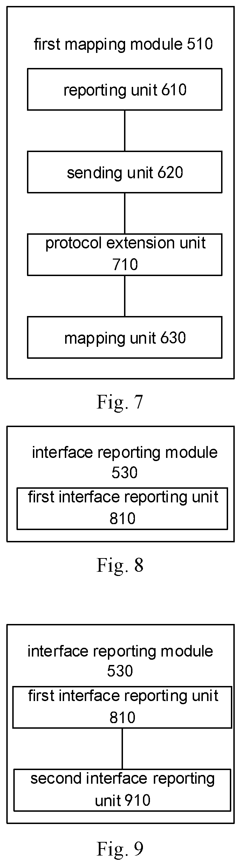

In an embodiment, figure 7 is a structural block diagram of a first mapping module according to an embodiment of the present invention. As shown in figure 7, in addition to the units in figure 6, the first mapping module 510 further includes: a protocol extension unit 710, configured to extend an interaction termination point of a Gigabit passive optical network Encapsulation Method (GEM) of an OMCI interface, so that a user interface of a slave ONU is connected to the GEM-PORT.

In an embodiment, figure 8 is a structural block diagram of an interface reporting module according to an embodiment of the present invention. As shown in figure 8, the interface reporting module 530 includes: a first interface reporting unit 810, configured to report a first interface object and a second interface object to an Element Management System (EMS) or an Optical Line Terminal (OLT) management system through an OMCI interface.

In an embodiment, figure 9 is a structural block diagram of an interface reporting module according to an embodiment of the present invention. As shown in figure 9, in addition to the units in figure 8, the interface reporting module 530 further includes: a second interface reporting unit 910, configured to report the first interface object and the second interface object to an Auto-Configuration Server (ACS) through a TR-181 interface.

It should be noted that each module may be implemented by software or hardware. The latter may be implemented in the following manner, but is not limited thereto. All the modules are located in a same processor; alternatively, the modules are located in different processors in an arbitrary combination.

Embodiments of the present invention further provide a computer readable storage medium. The computer readable storage medium stores a computer program. The computer program is configured to execute the steps in any one of the described method embodiments during running.

In an embodiment, the computer readable storage medium may include, but is not limited to, any medium that can store a computer program, such as a USB flash drive, a Read-Only Memory (ROM), a Random Access Memory (RAM), a mobile hard disk, a magnetic disk, or an optical disc.

The embodiments of the present invention further provide an electronic device, including a memory and a processor. The memory stores a computer program. The processor is configured to run the computer program to execute the steps in any one of the method embodiments.

In an embodiment, the electronic device can further include a transmission device and an input/output device, wherein the transmission device is connected to the processor, and the input/output device is connected to the processor.

For specific embodiments in this embodiment, reference may be made to the embodiments described in the foregoing embodiments and exemplary embodiments, and details are not repeatedly described in this embodiment.

Obviously, those skilled in the art should understand that each module or each step of the above embodiments of the present invention can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus, furthermore, in some cases, the shown or described steps may be executed in an order different from that described here, or they are made into integrated circuit modules respectively, or a plurality of modules or steps therein are made into a single integrated circuit module for implementation. As such, examples of the present invention are not limited to any particular hardware and software combination.

In order to enable those skilled in the art to better understand the technical solutions of the examples of the present invention, descriptions will be given below with reference to a scenario embodiment.

### Scenario embodiment 1

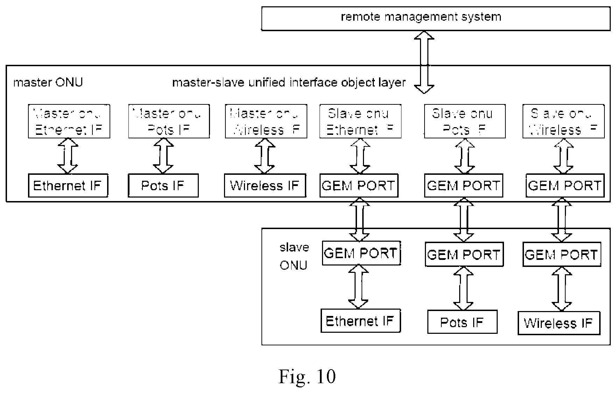

Figure 10 is a principle diagram of a management control method for optical network system according to an embodiment of a scenario of the present invention, as shown in figure 10, the user interface of the slave ONU is directly connected to the first interface object of the master ONU, and the interface objects of the master and slave ONUs (i.e. the first interface object and the second interface object) are named and encoded according to a unified rule, forming a unified user interface object layer of the master and slave ONUs to present an external capability, and accepting unified management of a remote management system.

The user interfaces of the slave ONUs include Ethernet **IF,** Pots **IF,** and Wireless IF. The first interface objects include a slave ONU Ethernet interface (Slave ONU Ethernet IF), a slave ONU traffic interface (Slave ONU Pots IF), and a slave ONU wireless interface (Slave ONU Wireless IF). The first interface object includes a master ONU Ethernet interface (Master ONU Ethernet IF), a master ONU traffic interface (Master ONU Pots IF), and a master ONU wireless interface (Master ONU Wireless IF). The user interface of the master ONU includes Ethernet IF, Pots IF, and Wireless IF.

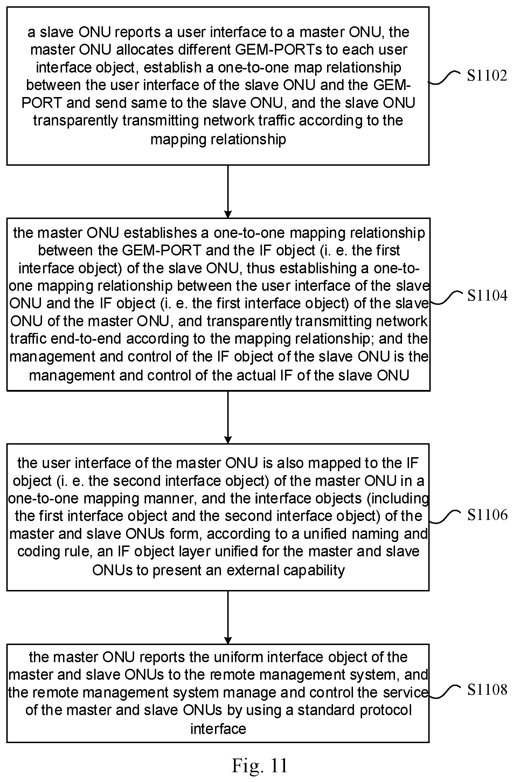

According to the principle of the management control method shown in figure 10, an embodiment of a scenario of the present invention provides a main process of a management control method for optical network system. Figure 11 is a flowchart of a management control method for optical network system according to an embodiment of a scenario of the present invention. As shown in figure 11, the method includes the following steps:
At S1102, the slave ONU reporting a user interface to the master ONU, the master ONU allocating different Gigabit passive optical network Encapsulation Method Ports (GEM-PORTs) to each user interface object, establishing a one-to-one mapping relationship between the user interface of the slave ONU and the GEM-PORT and sending to the slave ONU, and the slave ONU transparently transmitting network traffic according to the mapping relationship;
At S1104, the master ONU side establishes a one-to-one mapping relationship between the GEM-PORT and the slave ONUIF object (i.e. the first interface object), thus establishing a one-to-one mapping relationship from the user interface on the slave ONU to the slave ONUIF object (i.e. the first interface object) on the master ONU, and transparently transmitting the network traffic end-to-end according to the mapping relationship, in which the management and control of the slave ONUIF object is the management and control of the slave ONUIF actual IF;
At S1106, the user interface of the master ONU is also mapped to the **IF** object (i.e. the second interface object) of the master ONU in a one-to-one manner, and the interface objects (including the first interface object and the second interface object) of the master and slave ONUs form an IF object layer unified by the master and slave ONUs to present an external capability according to a unified naming and encoding rule;
At S1108, the master ONU reporting the unified interface object of the master and the slave ONUs to the remote management system, and the remote management system using a standard protocol interface to manage and control services of the master and the slave ONUs;

By means of the steps, the problem that it is difficult for a secondary architecture of a primary and a slave ONU of an FTTR network to manage and control the whole is solved, thereby greatly simplifying the management, control and forwarding architecture of the primary and the slave ONU, reducing the management and control complexity and the service forwarding delay, and improving the user experience; furthermore, the process of the method is compatible with the existing management and control protocol and interface, and is easy to intercommunicate and deploy.

The FTTR master ONU is the core of the home optical network system and plays an important role in the FTTR. The FTTR master ONU is not only an ONU, but also has the function of an OLT, and is connected to the OLT in pairs, and as a common ONU, receives a message from the OLT and sends the message to the OLT; The slave ONUs are connected downwards to the room, and at this time, the master ONU functions as an OLT to enable the OLT.

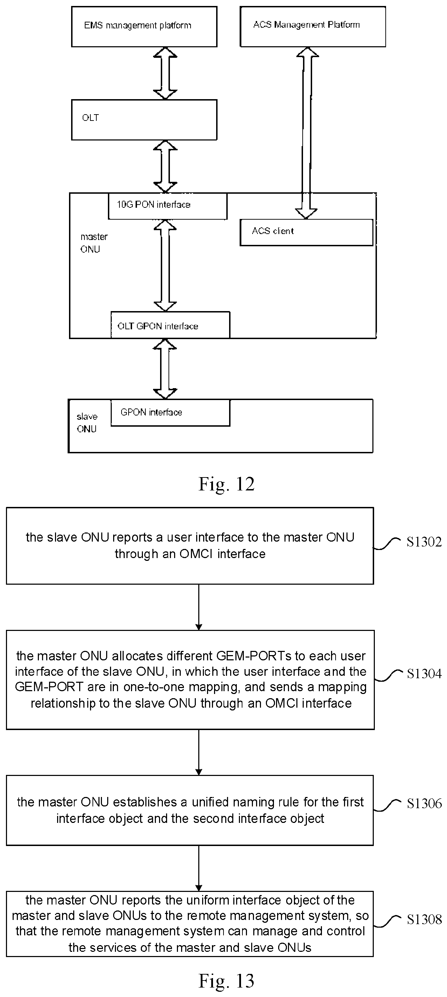

Figure 12 is a network architecture diagram of operation of a management control method according to a scenario embodiment of the present invention. As shown in figure 12, the management control method includes an EMS management platform, an Auto-Configuration Server (ACS) management platform, an OLT, a master ONU and a slave ONU.

According to the network architecture shown in figure 12, the following management and control method procedure is proposed in the embodiment of this scenario. Figure 13 is a flowchart of a management and control method for optical network system according to the embodiment of the scenario of the present invention. As shown in figure 13, the method includes the following steps:
At S1302: the slave ONU reports the user interface to the master ONU through the OMCI interface.

In an embodiment, the IF object may be reported via Point-to-Point Transport Protocol (PPTP) (PPTP Ethernet UNI, PPTP POTS UNI, PPTP 802.11 UNI), Ethernet IF, Pots IF, and Wireless IF.

At S1304, the master ONU allocates different GEM-PORTs to each user interface of the slave ONU, the user interface and the GEM-PORT are in one-to-one mapping, and the mapping relationship is issued to the slave ONU via an OMCI interface.

In an embodiment, a default Transmission Container ( TCONT) may be used, an IF object (i.e. a user interface) and a GEM-PORT are in one-to-one mapping, a mapping relationship is sent to a slave ONU via an OMCI interface, and network traffic is transparently transmitted by the salve ONU according to the mapping relationship;

Direct GEMPORT from salve ONU user interface is achieved by extending the OMCI interface GEM interaction termination point ITP, as defined in table 1:

**TABLE 1 - OMCI interface extended definition table**

| parameter | value |
|---|---|
| Interworking option | 8 indicates PPTP Ethernet UNI |
| | 9 indicates PPTP POTS UNI |
| | 10 indicates PPTP 802.11 UNI |
| Service Profile Pointer (SPP) | Managed entity ID corresponding to the value of the parameter Interworking |

At S1306: the master ONU establishes a unified naming rule for the first interface object and the second interface object.

The master ONU allocating different IF objects to each GEM-PORT, an IF object naming rule {eth, pots, wlan}.{slave ONUD=1,2,... }.{PORT ID}, an IF object instance coding rule high byte-slave ONUD low byte PORT ID, an IF carried by the master ONU self-allocating an IF object according to a {eth, pots, wlan}.0. {PORT ID} naming rule, and an IF object instance coding rule high byte-0 low byte PORT ID.

At S1308: the master ONU reports the uniform interface object of the master and slave ONUs to the remote management system, so that the remote management system can manage and control the services of the master and slave ONUs.

The master ONU reports an IF object (i.e. an interface object) unified by the master and the slave ONUs to the remote management system, and reports same to the EMS/OLT management system using an OMCI interface (PPTP Ethernet UNI, PPTP POTS UNI, and PPTP 802.11 UNI),
If the docking ACS can report by using a TR-181 interface (Device. Bridging, Device. Services. Voice Service, Device. WiFi), the remote management system manages and controls the master and slave ONUs.

### Scenario embodiment 2

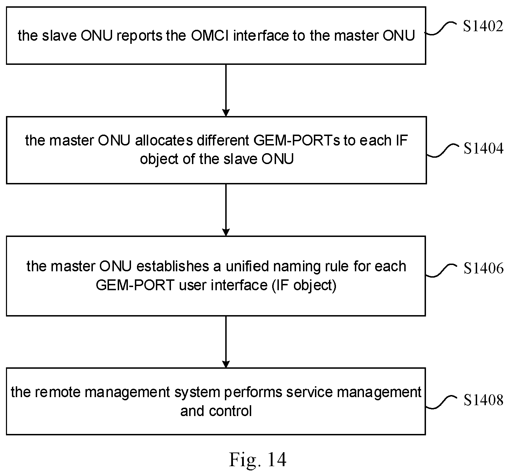

In this scenario embodiment, the number of each user interface is illustrated as an example. The slave ONU includes two Ethernet interfaces, two traffic interfaces, and two wireless interfaces. Figure 14 is a flowchart of a management control method for optical network system according to an embodiment of a scenario of the present invention. As shown in figure 14, the method includes the following steps:
At S1402: the slave ONU reports the OMCI interface to the master ONU;

The reported contents are as shown in Table 2:

**TABLE 2 OMCI interface table**

| Management Entity (ME) class | ME id (example number) |
|---|---|
| PPTP Ethernet UNI = 11 | 1, 2 |
| PPTP POTS UNI = 53 | 1, 2 |
| PPTP 802.11 UNI = 91 | 1, 2 |

At S1404, the master ONU allocates different GEM-PORTs to each IF object of the slave ONU;
Using a default TCONT and IF object to be in one-to-one mapping with the GEM-PORT, sending a mapping relationship to a slave ONU via an OMCI interface, and transparently transmitting network traffic by the salve ONU according to the mapping relationship, the contents being as shown in table 3:

**Table 3 GEM-PORT Allocation Table**

| MEclass, MEid | GEMPORT | TCONT |
|---|---|---|
| 11,1 | 1 | TcontID=0 Alloc-id = onu id onu id = 1 |
| 11,2 | 2 | |
| 53,1 | 3 | |
| 53,2 | 4 | |
| 91,1 | 5 | |
| 91,2 | 6 | |

The value of the interface GEM interaction termination point is shown in table 4:

**Table 4 Value table of GEM Interworking Termination Point**

| MEclass, MEid | GEM Interworking termination point |
|---|---|
| 11,1 | Interworking option = 8 |
| | Service profile pointer = 1 |
| 11,2 | Interworking option = 8 |
| | Service profile pointer = 2 |
| 53,1 | Interworking option = 9 |
| | Service profile pointer = 1 |
| 53,2 | Interworking option = 9 |
| | Service profile pointer = 2 |
| 91,1 | Interworking option = 10 |
| | Service profile pointer = 1 |
| 91,2 | Interworking option = 10 |
| | Service profile pointer = 2 |

At S1406, the master ONU establishing a unified naming rule for each GEM-PORT user interface (IF object);
The master ONU allocates a different IF object to each GEM PORT. The IF object naming rule {eth, pots, wlan}.{slave ONUD=1,2,... }.{PORT ID}, the IF object instance coding rule high byte is the ONU ID low byte PORT ID, and the IF object coding rule is as shown in table 5:

**Table 5 IF object encoding rules**

| GEMPORT | IF object name, instance number |
|---|---|
| 1 | eth.1.1,0x0101 |
| 2 | eth. 1.2, 0x0102 |
| 3 | pots.1.1,0x0101 |
| 4 | pots.1.2,0x0102 |
| 5 | wlan.1.1,0x0101 |
| 6 | wlan.1.2,0x0102 |

At S1408: the remote management system performs service management and control.

Two modes are included:
Method 1: Enable internet access through the OLT via the slave ONU Ethernet1 port, with internet VLAN 100.

The master ONU reports the IF object via the OMCI interface, as shown in table 6:

**Table 6 IF Object Reporting Tables**

| ME class | ME id (example number) |
|---|---|
| PPTP Ethernet UNI = 11 | 0x0101, 0x0102 |
| PPTP POTS UNI = 53 | 0x0101, 0x0102 |
| PPTP 802.11 UNI = 91 | 0x0101, 0x0102 |

Then, the OLT configures an Internet service channel for the IF object (11, 0x0101), where vlan100 is shown in table 7:

**Table 7 Internet service channel configuration table**

| parameter | Value |
|---|---|
| TcontID | 1 |
| Alloc-ID | 256 |
| GemPort ID | 1026 |
| VLAN | 100 |
| VLAN ACTION | ADD |
| Ethernet interface | 0x0101 |

In the embodiment of the present scenario, the forwarding path of the service flow is slave ONU Ethernet 1 --> GEMPORT 1 --> eth.1.1 (ADD VLAN100)-> GEMPORT 1026 --> TCONT 1.

Mode 2: Network access to the VLAN100 from a slave ONU Ethernet 1 port is configured through an ACS.
Device. Bridging. Bridge. 1. Standard = 802.1Q
Device. Bridging. Bridge.1. Port.0x0101. PVID = 100
Device. Bridging. Bridge.1. Port.0x0101. AcceptableFrameTypes = AdmitAll

### Scenario embodiment 3

In this scenario embodiment, a slave ONU Ethernet port multicast service, VLAN 200, is activated;
Step 1: a mapping relationship from a slave ONU **IF** interface to a master ONU **IF** object is established (the same as scenario embodiment 1)
Step 2: the OLT sends a service configuration

The OLT sends an IF object (11, 0x0102) multicast service channel via an OMCI interface, VLAN200 table 8:

**Table 8 multicast service channel table**

| parameter | Value |
|---|---|
| TcontID | 2 |
| Alloc-ID | 257 |
| GemPort ID | 1027 |
| Multicast VLAN | 200 |
| VLAN ACTION | uplink ADD, downlink STRIP |
| Ethernet interface | 0x0102 |

In this scenario embodiment, a forwarding path for a service flow is: slave ONU Ethernet 2--> GEMPORT2--> eth.1.2 (ADD VLAN200)-> GEMPORT1027--> TCONT2 .

In conclusion, the embodiment of the present invention provides a management and control method and apparatus for optical network system, which can be applied to lay an optical fiber to each room, and achieve interconnection with an FTTR master ONU by deploying slave ONUs in the room. As innovative service applications emerge endlessly, ultra high definition video, cloud VR, cloud game, online education, remote office, and so on impose higher and higher requirements on the bandwidth, delay, and jitter of the network. An optical fiber is laid in each room, and interconnection with a home gateway is implemented by deploying an edge ONU, thereby maximally ensuring high quality development of new service applications, such as online education, home office and home entertainment. In scene recognition, a remote management system can integrally manage and control an **FTTR** master and slave ONUs, directly communicate with the master ONU from a user port of the ONU, and transparently transmit network traffic; the technical solution of the embodiments of the present invention may be applied in the packet capture evidence.

The above are only preferred embodiments of the embodiments of the present invention, and are not intended to limit the embodiments of the present invention. For those skilled in the art, the embodiments of the present invention may have various modifications and variations. Any modifications, equivalent replacements, improvements and the like made within the principle of the embodiments of the present invention shall fall within the scope of protection of the embodiments of the present invention.

## Claims

1. A management and control method for optical network system, comprising:
mapping a user interface of a slave Optical Network Unit, ONU, to a first interface object of a master ONU;
mapping a user interface of the master ONU to a second interface object of the master ONU, wherein the first interface object and the second interface object adopt a unified naming and coding rule;
reporting, by the master ONU, the first interface object and the second interface object to a remote management system, so that the remote management system performs unified management and control on the master ONU and the slave ONU.

2. The method according to claim 1, wherein the mapping the user interface of the slave Optical Network Unit, ONU, to the first interface object of the master ONU comprises:
receiving, by the master ONU, the user interface reported by the slave ONU;
establishing, by the master ONU, a mapping relationship between the user interface and a Gigabit passive optical network Encapsulation Method Port, GEM-PORT, and sending the mapping relationship to the slave ONU;
establishing, by the master ONU, a mapping relationship between the GEM-PORT and the first interface object to implement one-to-one mapping from the user port of the slave ONU to the first interface object.

3. The method according to claim 2, wherein the receiving, by the master ONU, the user interface reported by the slave ONU comprises:
receiving, by the master ONU, the user interface reported by the slave ONU through an Optical network unit Management and Control Interface, OMCI.

4. The method according to claim 2, wherein the establishing, by the master ONU, a mapping relationship between the user interface and a Gigabit passive optical network Encapsulation Method Port, GEM-PORT, and sending the mapping relationship to the slave ONU comprises:
establishing, by the master ONU, a mapping relationship between the user interface and the GEM-PORT, and sending the mapping relationship to the slave ONU via an OMCI interface.

5. The method according to claim 2, wherein after the step of establishing, by the master ONU, a mapping relationship between the user interface and a Gigabit passive optical network Encapsulation Method Port, GEM-PORT, and sending the mapping relationship to the slave ONU, the method further comprises:
extending an interaction termination point of an OMCI Gigabit passive optical network Encapsulation Method, GEM, so that the user interface of the slave ONU is connected to the GEM-PORT.

6. The method according to claim 1, wherein reporting, by the master ONU, the first interface object and the second interface object to a remote management system comprises:
reporting, by the master ONU, the first interface object and the second interface object to an Element Management System, EMS, or an Optical Line Terminal, OLT, management system through an OMCI interface.

7. The method according to claim 1, wherein reporting, by the master ONU, the first interface object and the second interface object to a remote management system comprises:
reporting, by the master ONU, the first interface object and the second interface object to an Auto-Configuration Server, ACS, management system through a TR-181 interface.

8. The method according to claim 1, wherein the first interface object and/or the second interface object at least comprise: an Ethernet interface, a traffic interface, and a wireless interface.

9. A management and control apparatus for optical network system, comprising:
a first mapping module, configured to map a user interface of a slave Optical Network Unit, ONU, to a first interface object of a master ONU;
a second mapping module, configured to map a user interface of the master ONU to a second interface object of the master ONU, wherein the first interface object and the second interface object adopt a unified naming and coding rule;
an interface reporting module, configured to report the first interface object and the second interface object to a remote management system, so that the remote management system performs unified management and control on the master ONU and the slave ONU.

10. The apparatus according to claim 9, wherein the first mapping module comprises:
a reporting unit, configured to report the user interface of the slave ONU;
a sending unit, configured to establish, at the master ONU, a mapping relationship between the user interface and a Gigabit passive optical network Encapsulation Method Port, GEM-PORT, and send the mapping relationship to the slave ONU;
a mapping unit, configured to establish, at the master ONU, the mapping relationship between the GEM-PORT and the first interface object, so as to implement one-to-one mapping from the user port of the slave ONU to the first interface object.

11. The apparatus according to claim 9, wherein the first mapping module further comprises:
a protocol extension unit, configured to extend an interaction termination point of a Gigabit passive optical network Encapsulation Method, GEM, of an OMCI interface, so that the user interface of the slave ONU is connected to the GEM-PORT.

12. The apparatus according to claim 9, wherein the interface reporting module comprises:
a first interface reporting unit, configured to report the first interface object and the second interface object to an Element Management System, EMS, or an Optical Line Terminal, OLT, management system through an OMCI interface.

13. The apparatus according to claim 9, wherein the interface reporting module comprises:
a second interface reporting unit, configured to report the first interface object and the second interface object to an Auto-Configuration Server, ACS, through a TR-181 interface.

14. A computer readable storage medium, wherein the computer readable storage medium stores a computer program, and when the computer program is executed by a processor to implement the method according to any one of claims 1 to 8.

15. An electronic device, comprising a memory, a processor, and a computer program stored on the memory and run on the processor, when the computer program is executed by the processor to implement the method according to any one of claims 1 to 8.
